# FASCICULE DE BREVET EUROPEEN

(11) **EP 0 873 074 B1**
(45) Date de publication et mention de la délivrance du brevet: **03.04.2002**
(21) Numéro de dépôt: 97900621.0
(22) Date de dépôt: 09.01.1997
(51) Int. Cl.: A47J 37/08

(54) **APPAREIL DE GRILLAGE DU TYPE GRILLE-PAIN AVEC CONTROLE VISUEL**
GRILLGERÄT BROTRÖSTERTYPE MIT SICHTKONTROLLE
TOASTING APPARATUS SUCH AS A TOASTER ENABLING VISUAL MONITORING

(30) Priorité: 10.01.1996 FR 9600395
(43) Date de publication de la demande: 28.10.1998
(73) Titulaire: SEB S.A., 69130 Ecully (FR)
(72) Inventeur: THIRIAT, Sylvain, F-88200 Remiremont (FR); KLINGER, Michel, F-68140 Stosswihr (FR)
(86) Numéro de dépôt international: FR9700040
(87) Numéro de publication internationale: WO9724967

(56) Documents cités:
- EP-A- 0 033 642
- DE-A- 4 214 297
- DE-U- 9 015 300
- FR-A- 2 050 772
- FR-A- 2 707 858

## Description

### DOMAINE TECHNIQUE

La présente invention se rapporte au domaine technique général des dispositifs et appareils ayant pour objet le grillage et/ou le réchauffage de produits agro-alimentaires comestibles par l'intermédiaire d'un traitement par rayonnement infrarouge. L'invention concerne un appareil de grillage et/ou de réchauffage pour produits agro-alimentaires du type panifiés. L'invention concerne notamment un grille-pain.

La présente invention se rapporte donc en particulier à un appareil de grillage pour produits panifiés, constitué d'un bâti pourvu d'une fente d'introduction débouchant sur une chambre de grillage destinée à recevoir les produits, et disposée entre des éléments chauffants associés à des réflecteurs thermiques, lesquels permettent de diriger vers les produits l'énergie thermique, produite par les éléments chauffants, notamment sous forme de rayonnement, ledit appareil étant pourvu de moyens d'observation pour le contrôle visuel du degré de grillage desdits produits placés dans la chambre de grillage.

### TECHNIQUE ANTERIEURE

II est ainsi déjà connu, par l'intermédiaire du document FR-A-2.050.772, de réaliser des grille-pain munis d'une fenêtre d'observation des opérations de grillage. En effet, il s'agit d'un grille-pain électrique se présentant sous forme de boîtier dont les parois latérales forment la chambre de grillage. Des fenêtres transparentes sont ménagées dans lesdites parois de façon à permettre à l'utilisateur d'observer les tranches de pain disposées dans le grille-pain. Les éléments chauffants ainsi que les réflecteurs thermiques du grille-pain sont disposés de telle sorte qu'ils ne masquent pas les tranches de pain qu'il faut observer. Ce sont ainsi les surfaces intérieures du boîtier qui peuvent servir de réflecteurs. Des réflecteurs spéciaux peuvent également être montés à l'intérieur du boîtier.

Un problème, lié à la conception du grille-pain décrit dans ce document, réside dans la mise en place sur le boîtier, de fenêtres d'observation présentant une surface importante de manière à obtenir une visibilité suffisante générant, par la même occasion, une perte importante de rayonnement infrarouge. La mise en place de réflecteurs spécifiques ne permet pas de répondre à ce problème à partir du moment où ces derniers sont disposés de manière à ne pas dégrader la visibilité.

Un autre inconvénient des grille-pain décrits dans ce document est également lié à la contrainte de visibilité. En effet, la forme ou la disposition spécifique des réflecteurs thermiques altère fortement la qualité du grillage des tranches de pain et provoque un échauffement important du boîtier. En effet, les fuites importantes de rayonnement infrarouge ont pour conséquence d'augmenter la durée du grillage des tranches de pain pour obtenir un degré de cuisson acceptable. Une telle augmentation de la durée du grillage provoque très souvent un dessèchement excessif des tranches de pain. Un tel dessèchement est également lié à la nature et/ou à la fraîcheur desdites tranches de pain ce qui rend l'obtention d'une qualité de grillage optimale avec le grille-pain décrit dans ce document très aléatoire.

Un autre inconvénient lié à l'utilisation d'un grille-pain décrit dans le document mentionné précédemment, résulte de l'influence de la lumière ambiante ou éventuellement du spectre visible rayonné par les éléments chauffants. L'image restituée de la couleur des produits préparés est souvent altérée par rapport à la couleur réelle. La longueur d'onde pour l'énergie maximale émise par les résistances chauffantes génère une dominante rouge très éloignée du spectre des lampes d'éclairage usuelles. Ceci s'avère souvent gênant.

### EXPOSE DE L'INVENTION

L'objet de la présente invention vise donc à réaliser un appareil de grillage, en particulier un grille-pain, ne présentant pas les inconvénients que l'on retrouve dans l'art antérieur, et fournissant à son utilisateur, de manière simple et peu coûteuse, un contrôle fiable et réaliste du degré de cuisson ou de la couleur des produits préparés dans un tel appareil.

Un autre objet de la présente invention vise à réaliser des moyens d'accès visuels à l'intérieur de la chambre de cuisson en n'affectant pas sensiblement les performances en temps et en température ou en puissance de l'appareil de grillage. Un objet complémentaire de la présente invention vise à réaliser un appareil de grillage dont les parois externes accessibles ne présentent pas un échauffement excessif lié à des fuites thermiques par rayonnement.

Les objets assignés à la présente invention sont atteints à l'aide de moyens d'observation comprenant un moyen d'éclairage de la chambre de grillage de façon à restituer une image fidèle de la couleur des produits préparés.

### DESCRIPTION SOMMAIRE DES DESSINS

D'autres caractéristiques et avantages de l'invention apparaîtront dans la description donnée ci-après en référence aux dessins annexés dans lesquels:
- la figure 1 représente une vue en coupe d'un appareil de grillage conforme à l'invention,
- la figure 2 représente une vue en perspective d'un exemple de réalisation d'un appareil conforme à l'invention.

### MEILLEURE MANIERE DE REALISER L'INVENTION

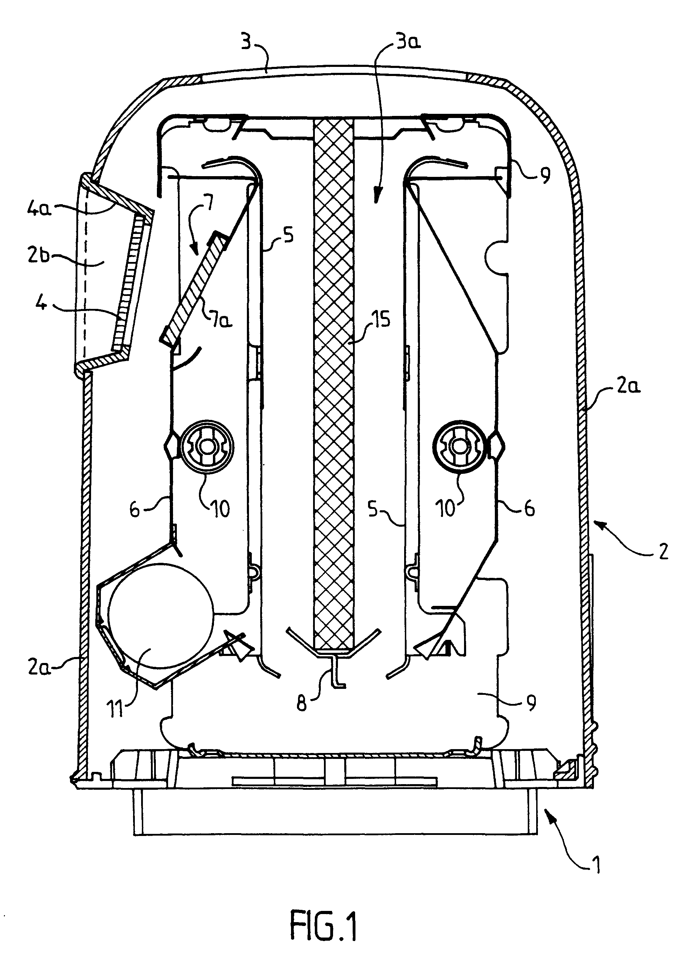

L'appareil de grillage conforme à l'invention représenté à la figure 1 réalise, par exemple, un grille-pain. Cet appareil comprend un socle 1 sur lequel est monté un bâti 2. Ce dernier présente, par exemple, une forme parallélépipédique. Les matériaux constitutifs du socle 1 et du bâti 2 sont, par exemple, des matériaux métalliques inoxydables ou bien des matériaux plastiques résistant à des températures élevées. Le bâti 2 présente également une fente d'introduction 3 dirigée vers le haut et s'étend par exemple dans un plan d'extension horizontal. La localisation de la fente d'introduction 3 dans la partie supérieure du bâti 2 permet de définir une chambre de grillage 3a à introduction verticale pour les produits panifiés. La chambre de grillage 3a est, de préférence, localisée en partie centrale de l'appareil. Le bâti 2 est fixé sur le socle 1 par tout moyen et entoure une structure métallique 9, supportant un ensemble d'éléments délimitant et définissant la chambre de grillage 3a. La structure métallique 9 supporte ainsi des réflecteurs thermiques 6 agencés de part et d'autre de la chambre de grillage 3a et de préférence le long de ses grands côtés, lorsque cette dernière présente une forme parallélépipédique. Le bâti 2 et le réflecteur thermique 6 peuvent également constituer une pièce métallique unique. Alternativement la bâti 2 peut être réalisé en plusieurs pièces, dont une transparente en polymère ou verre, ou comporter une zone transparente obtenue par exemple par injection simultanée de matière opaque et transparente.

Des éléments chauffants 10 sont associés aux réflecteurs thermiques 6 de manière à produire des rayonnements infrarouges et visibles éventuellement dirigés sur les produits 15 disposés dans la chambre de grillage 3a. Les dimensions et les configurations des réflecteurs thermiques 6 sont optimisées pour d'une part diriger l'énergie thermique produite, vers les produits 15 sur au moins un de leurs côtés présentant une surface importante. Ceci est particulièrement avantageux pour les tranches de pain.

Les réflecteurs thermiques 6 réalisent également des écrans thermiques disposées entre les éléments chauffants 10 et les parois 2a, lesquelles sont réalisées, par exemple, avec un matériau plastique. La chambre de grillage 3a se trouve également délimitée par l'intermédiaire d'une grille fixe 5 montée sur les réflecteurs thermiques 6 de façon à réaliser une séparation entre le volume interne accessible de la chambre de grillage 3a et les éléments chauffants 10 associés à leurs réflecteurs thermiques 6. Ceci permet d'éviter un contact direct entre les éléments chauffants 10 et les produits 15 introduits dans la chambre de grillage 3a, tout en n'entravant pas la circulation de l'énergie thermique sous forme de rayonnement ou de convection. En effet, une forme particulière des réflecteurs thermiques 6, et de préférence une forme incurvée ou angulaire vers la partie supérieure de l'appareil, permet de diriger au moins partiellement l'énergie thermique sous forme de convection vers les produits 15.

L'appareil conforme à l'invention comporte également un support 8 mobile à l'intérieur de la chambre de grillage 3a et destiné à déplacer les produits 15. Ce support 8 permet de disposer les produits 15 panifiés dans une position de grillage dans un premier temps et d'évacuer lesdits produits 15 préparés de la chambre de grillage 3a dans un second temps. Le support 8 est réalisé de manière connue et se présente sous forme de chariot mobile, soit accessible manuellement de l'extérieur de l'appareil, soit commandé automatiquement par un moteur électrique. Des moyens de maintien du support 8 en position basse correspondant à la mise en place des produits 15 dans la chambre de grillage 3a peuvent également être prévus. La grille fixe 5 est avantageusement réalisée avec des tiges ou des fils d'acier inoxydable.

Selon une variante de réalisation de l'appareil conforme à l'invention, la grille fixe 5 est mobile ou amovible sur au moins un côté de la chambre de grillage 3a, de façon à moduler les dimensions de cette dernière, et à centrer le pain entre les résistances chauffantes. Avantageusement les réflecteurs thermiques 6 se déplacent avec la grille mobile. L'appareil définit par exemple un grille pain à capacité variable.

L'appareil de grillage conforme à l'invention est également pourvu de moyens d'observation pour le contrôle visuel du degré de grillage des produits 15 placés dans la chambre de grillage 3a. Les moyens d'observation comprennent à cet effet un moyen d'éclairage 11 de la chambre de grillage 3a de façon à restituer une image fidèle de la couleur des produits 15 préparés. En effet, c'est la couleur des produits 15 soumis au rayonnement infrarouge émis par les éléments chauffants 10 et les réflecteurs thermiques 6 qui permet de déterminer l'avancement des opérations de grillage. Une telle évolution doit dans le cadre de la présente invention pouvoir être observée de la part de l'utilisateur de l'appareil de grillage. L'observation doit en outre ne pas être tronquée ou altérée par la lumière visible ambiante ou par le rayonnement visible émis par les éléments chauffants 10 sachant que ces derniers sont réalisés, par exemple, avec des barreaux en matière céramique du type stéatite ou en matériaux à base de silice, sur lesquels ou dans lesquels sont enroulés des filaments résistifs chauffants. Les éléments chauffants 10 peuvent également comporter par exemple une plaque de mica supportant un filament résistif. La plaque de mica comporte par exemple une ouverture d'observation de manière à réaliser un accès visuel à la chambre de grillage.

Le rayonnement visible émis par ces éléments chauffants 10 ne permet pas en général de restituer la vraie couleur des produits 15 grillés. La mise en place du moyen d'éclairage 11 permet par conséquent de palier à ces problèmes. Le moyen d'éclairage 11 est avantageusement monté sur le réflecteur thermique et permet par l'intermédiaire d'une ouverture ménagée dans ledit réflecteur thermique 6 d'éclairer les produits 15 placés dans la chambre de grillage 3a. Avantageusement, le moyen d'éclairage 11 est localisé à l'intérieur de l'appareil de manière à éclairer au moins partiellement les produits 15 panifiés sur au moins un côté. Le moyen d'éclairage 11 peut être monté, à titre d'exemple dans une position basse à l'intérieur de l'appareil. Le moyen d'éclairage 11 est par exemple branché en série avec les éléments chauffants. Le moyen d'éclairage 11 peut également être branché sur un point milieu d'un pont diviseur constitué par les éléments chauffants 10 branchés en série. L'alimentation en tension réduite du moyen d'éclairage permet d'utiliser des lampes ou ampoules plus robustes et plus fiables.

Selon une variante de réalisation de l'appareil conforme à l'invention, le moyen d'éclairage est localisé dans l'appareil de façon à éclairer les produits 15 sur au moins deux côtés. Divers autres emplacements du moyen d'éclairage 11 peuvent également être envisagés sans sortir du cadre de la présente invention. Ainsi l'illumination du pain peut être obtenue par éclairage direct ou réfléchi par un miroir ou conduit par fibre optique. Cette dernière conception permet de placer une lampe dans une zone peu chaude, à l'abri des miettes.

Le moyen d'éclairage 11 fournit un rayonnement dont le spectre de longueurs d'ondes s'étend de 0.5 µm à 1.5 µm et de préférence de 0.9 µm à 1.1 µm. Un tel spectre de longueur d'ondes permet à l'utilisateur de contrôler de manière précise l'état d'avancement des opérations de grillage ou de cuisson à l'intérieur de la chambre de grillage 3a. L'utilisateur peut ainsi visualiser les produits 15 lors des opérations de grillage à travers la fente 3 ou une partie transparente du bâti 2. A titre d'exemple, le moyen d'éclairage 11 comprend au moins une lampe halogène. Des lampes à incandescence, fluorescentes ou à décharge peuvent également convenir pour réaliser les moyens d'éclairage 11. Selon une variante de réalisation de l'appareil de grillage conforme à l'invention, le moyen d'éclairage 11 est réalisé avec les éléments chauffants 10. Ces derniers fournissent dans ces conditions un rayonnement dont la longueur d'onde pour le maximum d'énergie émise est inférieure à 1.5 µm et de préférence inférieure à 1.2 µm. De tels éléments chauffants 10 présentent de préférence un spectre utile de longueurs d'ondes qui s'étend au moins de 0.9 µm à 5 µm.

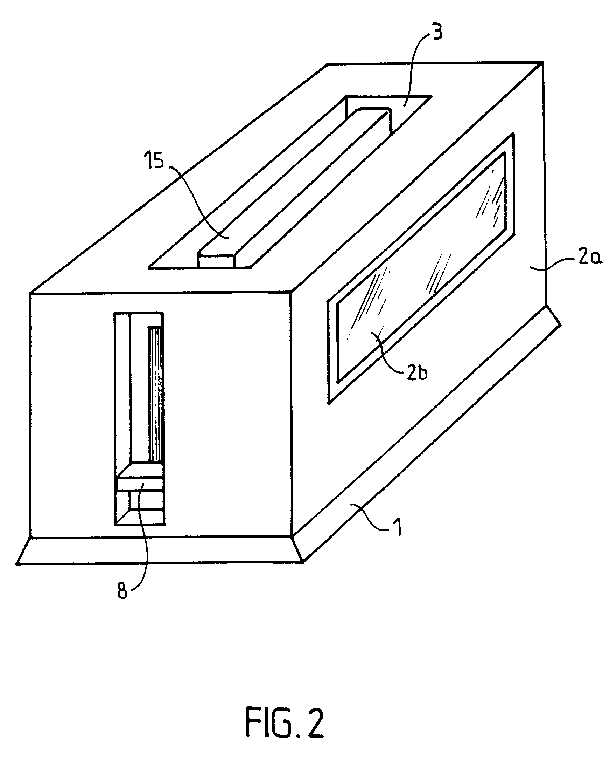

Selon une variante préférentielle de réalisation de l'appareil de grillage conforme à l'invention, les moyens d'observation comprennent sur au moins un côté de l'appareil une fenêtre transparente 2b ménagée dans une paroi 2a du bâti 2 et représentée par exemple à la figure 2. Cette fenêtre transparente 2b se situe en regard d'une partie ajourée 7 du réflecteur thermique 6. La partie ajourée 7 est, par exemple, recouverte d'une plaque transparente 7a du type verre, laquelle peut avoir un effet grossissant. Selon une variante avantageuse de l'appareil conforme à l'invention, la plaque transparente 7a est traitée avec une couche réfléchissante vis à vis du rayonnement infrarouge, ou filtrante pour une partie du spectre émis. La plaque transparente 7a peut également être chauffante et être pourvue à ce titre d'un dépôt résistif transparent, à base d'oxyde d'étain, pour compenser une éventuelle réduction de performance liée à l'ajourement du réflecteur thermique 6.

Dans la variante de réalisation où la chambre de grillage 3a présente une grille fixe 5 sur l'un de ses côtés et une grille mobile sur un autre côté, la fenêtre transparente 2b est située sur le côté de la grille fixe 5.

La partie ajourée 7 peut également être constituée, selon une autre variante de réalisation de l'appareil, d'une série de fentes ou d'ouvertures ménagées dans le réflecteur thermique 6. Une série de perçages ou un métal déployé peut aussi convenir. La série de fentes peut également être recouverte d'une plaque transparente 7a. Avantageusement la fenêtre transparente 2b comprend une partie 4 réalisée en verre ou en plastique transparent. La partie 4 peut être montée sur un cadre 4a rapporté sur la paroi 2a. Ceci permet de donner à ladite fenêtre transparente 2b, une orientation facilitant les observations à travers ladite fenêtre transparente 2b. L'utilisation d'une plaque transparente 7a présente l'avantage qu'elle ne laisse pas s'échapper l'énergie thermique par convection au travers de la partie ajourée 7.

Selon une réalisation avantageuse de l'appareil conforme à l'invention, les éléments chauffants 10 sont agencés sensiblement à mi-hauteur de part et d'autre de la chambre de grillage 3a. Le moyen d'éclairage 11 est disposé au voisinage de la partie basse et les moyens d'observation sont situés vers le haut de la chambre de grillage 3a. Une telle conception permet d'éclairer la chambre de grillage 3a par le bas et par conséquent d'éclairer une grande partie du produit 15.

Selon une autre variante de réalisation de l'appareil conforme à l'invention, le moyen d'éclairage 11 peut être agencé dans une position centrale soit sous la chambre de grillage 3a, soit à des extrémités de la chambre de grillage 3a de façon à éclairer les produits 15 sur au moins deux de leurs côtés. Les réflecteurs thermiques 6 sont également utilisés pour répartir la luminosité dans la chambre de grillage 3a. Selon une variante complémentaire de réalisation de l'appareil conforme à l'invention, ce dernier comporte une ou plusieurs chambres de grillage 3a disposées côté à côte et éventuellement un moyen d'observation visuel sur chaque paroi 2a du bâti 2. Diverses modifications ou réarrangements des différents éléments de l'appareil de grillage conforme à l'invention peuvent être envisagés sans sortir du cadre de la présente invention. Ainsi, selon une variante de réalisation complémentaire de l'appareil de grillage conforme à l'invention, la fenêtre transparente 2b peut être remplacée par une simple ouverture ménagée dans la paroi 2a.

Un autre avantage de l'appareil de grillage conforme à l'invention réside dans la limitation des pertes par rayonnement liées à la présence de moyens d'observation du degré de grillage des produits 15. Un autre avantage de l'appareil de grillage conforme à l'invention réside dans le fait qu'une observation en continu évite à l'utilisateur de dégager, même partiellement, des produits 15 de la chambre de grillage 3a, pour vérifier la couleur ou le degré de grillage desdits produits.

Un avantage supplémentaire de l'appareil de grillage conforme à l'invention réside dans son fonctionnement extrêmement simple. Il suffit ainsi de brancher les éléments chauffants 10, lesquels sont de préférence alimentés électriquement, disposer ensuite les produits 15 sur le support 8, déplacer ledit support 8 vers le fond de la chambre de grillage 3a, observer l'évolution du grillage ou de la cuisson et évacuer dès la fin des opérations de cuisson les produits 15 avec le même chariot 8. Chaque opération de grillage peut ainsi être adaptée pour obtenir un résultat optimal qui ne dépend ni de la nature ou de l'état initial des produits 15, ni de l'inertie thermique de l'appareil de grillage ou des éléments chauffants 10. Les opérations de cuisson ou de grillage prennent ainsi en compte tout un ensemble de paramètres qui ne sont pas considérés, en général, avec des appareils dont les opérations de cuisson sont programmées de manière rigide en temps, en température ou en puissance. L'utilisateur dispose ainsi du produit 15 et en particulier de tranches de pain grillées selon ses propres goûts sans avoir à intervenir sur des moyens de programmation de l'appareil. Chaque opération de cuisson est ainsi personnalisée.

### POSSIBILITES D'APPLICATION INDUSTRIELLE

L'invention trouve son application dans le domaine technique des appareils de grillage du type grille-pain.

## Revendications

1. Appareil de grillage pour produits (15) panifiés, constitué d'un bâti (2) pourvu d'une fente d'introduction (3) débouchant sur une chambre de grillage (3a) destinée à recevoir les produits, et disposée entre des éléments chauffants (10) associés à des réflecteurs thermiques (6), lesquels permettent de diriger vers les produits, l'énergie thermique, produite par les éléments chauffants (10), notamment sous forme de rayonnement, ledit appareil étant pourvu de moyens d'observation pour le contrôle visuel du degré de grillage desdits produits (15) placés dans la chambre de grillage (3a), **caractérisé en ce que** les moyens (2b, 7) d'observation comprennent un moyen d'éclairage (11) de la chambre de grillage (3a), de façon à restituer une image fidèle de la couleur des produits (15) préparés.

2. Appareil de grillage selon la revendication 1, **caractérisé en ce que** les moyens d'observation comprennent sur au moins un côté de l'appareil, une fenêtre transparente (2b) ménagée dans une paroi (2a) du bâti, (2) en regard d'une partie ajourée (7) du réflecteur thermique (6).

3. Appareil de grillage selon la revendication 1 ou 2, **caractérisé en ce qu'**il comporte un support (8) de produits, mobile à l'intérieur de la chambre de grillage (3a) pour disposer les produits (15) panifiés dans une position de grillage et pour évacuer lesdits produits (15) préparés de la chambre de grillage (3a).

4. Appareil de grillage selon l'une des revendications 1 à 3, **caractérisé en ce que** le moyen d'éclairage (11) fournit un rayonnement dont le spectre de longueurs d'ondes s'étend de 0.5 µm à 1.5 µm, et de préférence de 0.9 µm à 1.1 µm.

5. Appareil de grillage selon l'une des revendications 1 à 4, **caractérisé en ce que** le moyen d'éclairage (11) comprend au moins une lampe halogène.

6. Appareil de grillage selon l'une des revendications 1 à 5, **caractérisé en ce que** le moyen d'éclairage (11) est localisé à l'intérieur de l'appareil de manière à éclairer au moins partiellement les produits (15) panifiés sur au moins un côté.

7. Appareil de grillage selon l'une des revendications 1 à 5, **caractérisé en ce que** le moyen d'éclairage (11) est réalisé avec les éléments chauffants (10).

8. Appareil de grillage selon la revendication 7, **caractérisé en ce que** les éléments chauffants (10) fournissent un rayonnement dont la longueur d'onde pour le maximum d'énergie émise est inférieure à 1.5 µm et de préférence inférieure à 1.2 µm.

9. Appareil de grillage selon l'une des revendications 2 à 8, **caractérisé en ce que** la partie ajourée (7) est constituée d'une série de fentes ménagées dans le réflecteur thermique (6).

10. Appareil de grillage selon l'une des revendications 2 à 9, **caractérisé en ce que** la partie ajourée (7) est recouverte d'une plaque transparente (7a) du type verre.

11. Appareil de grillage selon la revendication 10, **caractérisé en ce que** la plaque transparente (7a) est traitée avec une couche réfléchissante vis-à-vis du rayonnement infrarouge.

12. Appareil de grillage selon l'une des revendications 2 à 11, **caractérisé en ce que** la fenêtre transparente (2b) comprend une partie (4) réalisée en verre ou en plastique transparent.

13. Appareil de grillage selon l'une des revendications 1 à 12, **caractérisé en ce que** la fente d'introduction (3) est localisée dans la partie supérieure du bâti (2) de façon à définir une chambre de grillage (3a) à introduction verticale.

14. Appareil de grillage conforme à l'une des revendications 1 a 13, **caractérisé en ce qu'**il réalise un grille-pain.

## Claims

1. A toasting appliance for bread products (15), the appliance being constituted by a housing (2) provided with an insertion slot (3) opening into a toasting chamber (3a) designed to receive the products, and disposed between heater elements (10) associated with heat reflectors (6) which enable the heat energy produced by the heater elements (10), in particular in the form of radiation, to be directed towards the products, said appliance being provided with observation means'for visually monitoring the degree to which said products (15) placed in the toasting chamber (3a) are toasted, the appliance being **characterized in that** the observation means (2b, 7) include lighting means (11) for lighting the toasting chamber (3a) so as to give a true image of the color of the prepared products (15).

2. A toasting appliance according to claim 1, **characterized in that** the observation means include, on at least one side of the appliance, a transparent window (2b) provided in a wall (2a) of the housing (2) and facing an open portion (7) of the heat reflector 6.

3. A toasting appliance according to claim 1 or claim 2, **characterized in that** it includes a product support (8) that is movable inside the toasting chamber (3a) in order to dispose bread products (15) in a toasting position, and in order to extract prepared products (15) from the toasting chamber (3a).

4. A toasting appliance according to any one of claims 1 to 3, **characterized in that** the lighting means (11) provides radiation having a wavelength spectrum that extends from 0.5 µm to 1.5 µm, and preferably from 0.9 µm to 1.1 µm.

5. A toasting appliance according to any one of claims 1 to 4, **characterized in that** the lighting means (11) comprises at least one halogen lamp.

6. A toasting appliance according to any one of claims 1 to 5, **characterized in that** the lighting means (11) is located inside the appliance so as to illuminate, at least in part, the bread products (15) on at least one side.

7. A toasting appliance according to any one of claims 1 to 5, **characterized in that** the lighting means (11) is constituted by the heater elements 10.

8. A toasting appliance according to claim 7, **characterized in that** the heater elements (10) emit radiation with an energy maximum at a wavelength that is shorter than 1.5 µm, and preferably shorter than 1.2 µm.

9. A toasting appliance according to any one of claims 2 to 8, **characterized in that** the open portion (7) is constituted by a series of slots or openings formed in the heat reflector (6).

10. A toasting appliance according to any one of claims 2 to 9, **characterized in that** the open portion 7 is covered by a transparent plate (7a) of the glass type.

11. A toasting appliance according to claim 10, **characterized in that** the transparent plate (7a) is treated with a layer that reflects infrared radiation.

12. A toasting appliance according to any one of claims 2 to 11, **characterized in that** the transparent window (2b) comprises a portion (4) made of glass or transparent plastic.

13. A toasting appliance according to any one of claims 1 to 12, **characterized in that** the insertion slot (3) is located in the top of the housing (2) so as to define a toasting chamber (3a) into which products are inserted vertically.

14. A toasting appliance according to any one of claims 1 to 13, **characterized in that** it constitutes a toaster.

## Patentansprüche

1. Röstgerät für Brot-Produkte (15), bestehend aus einem Gehäuse (2), das mit einem Einführschlitz (3) versehen ist, der in einer Röstkammer (3a) mündet, die dafür vorgesehen ist, die Produkte aufzunehmen, und zwischen Heizelementen (10) angeordnet ist, denen Wärmereflektoren (6) zugeordnet sind, die es ermöglichen, die von den Heizelementen (10) erzeugte Wärmeenergie, insbesondere in der Form von Strahlung, zu den Produkten zu richten, wobei das Gerät mit Beobachtungsmitteln für die visuelle Kontrolle des Röstgrades der Produkte (15) versehen ist, die in der Röstkammer (3a) angeordnet sind, **dadurch gekennzeichnet, daß** die Beobachtungsmittel (2b, 7) ein Mittel (11) zum Beleuchten der Röstkammer (3a) enthalten, um ein wahrheitsgetreues Bild der Farbe der zubereiteten Produke (15) wiederherzustellen.

2. Röstgerät nach Anspruch 1, **dadurch gekennzeichnet, daß** die Beobachtungsmittel auf wenigstens einer Seite des Gerätes ein transparentes Fenster (2b) aufweisen, das in einer Wand (2a) des Gehäuses (2) gegenüber einem durchbrochenen Abschnitt (7) des Wärmereflektors (6) ausgebildet ist.

3. Röstgerät nach Anspruch 1 oder Anspruch 2, **dadurch gekennzeichnet, daß** es einen Produkt-Träger (8) aufweist, der im Inneren der Röstkammer (3a) bewegbar ist, um die Brot-Produkte (15) in einer Röstposition anzuordnen und um die zubereiteten Produkte (15) aus der Röstkammer (3a) zu entfernen.

4. Röstgerät nach einem der Ansprüche 1 bis 3, **dadurch gekennzeichnet, daß** das Beleuchtungsmittel (11) eine Strahlung liefert, deren Wellenlängenspektrum von 0,5 µm bis 1,5 µm und vorzugsweise von 0,9 µm bis 1,1 µm reicht.

5. Röstgerät nach einem der Ansprüche 1 bis 4, **dadurch gekennzeichnet, daß** das Beleuchtungsmittel (11) wenigstens eine Halogenlampe enthält.

6. Röstgerät nach einem der Ansprüche 1 bis 5, **dadurch gekennzeichnet, daß** das Beleuchtungsmittel (5) im Inneren des Gerätes so angeordnet ist, daß die Brot-Produkte (15) wenigstens teilweise auf wenigstens einer Seite beleuchtet werden.

7. Röstgerät nach einem der Ansprüche 1 bis 5, **dadurch gekennzeichnet, daß** das Beleuchtungsmittel (11) zusammen mit den Heizelementen (10) ausgeführt ist.

8. Röstgerät nach Anspruch 7, **dadurch gekennzeichnet, daß** die Heizelemente (10) eine Strahlung liefern, deren Wellenlänge bei dem Maximum von abgegebener Energie kleiner als 1,5 µm und vorzugsweise kleiner als 1,2 µm ist.

9. Röstgerät nach einem der Ansprüche 2 bs 8, **dadurch gekennzeichnet, daß** der durchbrochene Abschnitt (7) durch eine Reihe von Schlitzen gebildet ist, die in dem Wärmereflektor (6) ausgebildet sind.

10. Röstgerät nach einem der Ansprüche 2 bis 9, **dadurch gekennzeichnet, daß** der durchbrochene Abschnitt (7) von einer transparenten Platte (7a) aus Glas abgedeckt ist.

11. Röstgerät nach Anspruch 10, **dadurch gekennzeichnet, daß** die transparente Platte (7a) mit einer Schicht bezogen ist, die bezüglich Infrarotstrahlung reflektierend ist.

12. Röstgerät nach einem der Ansprüche 2 bis 11, **dadurch gekennzeichnet, daß** das transparente Fenster (2b) einen Abschnitt (4) aufweist, der aus Glas oder transparentem Kunststoff ausgeführt ist.

13. Röstgerät nach einem der Ansprüche 1 bis 12. **dadurch gekennzeichnet, daß** der Einführschlitz (3) in dem oberen Abschnitt des Gehäuses (2) angeordnet ist, um eine Röstkammer (3a) mit vertikaler Einführung zu definieren.

14. Röstgerät nach einem der Ansprüche 1 bis 13, **dadurch gekennzeichnet, daß** es ein Toaster ist.
